# EUROPÄISCHE PATENTANMELDUNG

(11) **EP 4 840 372 A1**
(43) Veröffentlichungstag der Anmeldung: **18.11.2026**
(21) Anmeldenummer: 26176300.7
(22) Anmeldetag: 04.05.2026
(51) Int. Cl.: A47J 31/60, A47J 31/44

(54) **GETRÄNKEZUBEREITUNGSVORRICHTUNG UND VERFAHREN ZUR VERBESSERUNG VON HYGIENEBEDINGUNGEN**

(30) Priorität: 12.05.2025 DE 102025118074
(71) Anmelder: Eugster/Frismag AG, 8580 Amriswil (CH)
(72) Erfinder: Frei, Nicolas, 9320 Arbon (CH); Wäger, Simon, 8580 Amriswil (CH)
(74) Vertreter: advotec.

(57) **Zusammenfassung**

Getränkezubereitungsvorrichtung mit einem Auffangbehälter für, insbesondere loses oder portioniertes, feuchtes Getränkesubstrat, wobei der Auffangbehälter eine Öffnung aufweist oder Öffnungsflächen umfasst, über die der Auffangbehälter mit einem Innenraum der Getränkezubereitungsvorrichtung in Verbindung steht, wobei der Öffnung oder den Öffnungsflächen ein, bevorzugt elektromechanischer, Aktor zugeordnet vorgesehen ist, der dazu eingerichtet ist eine Luftströmung an der Öffnung oder den Öffnungsflächen zu erzeugen.

## Beschreibung

Die vorliegende Erfindung betrifft eine Getränkezubereitungsvorrichtung gemäß den Merkmalen des Oberbegriffs 1. Ferner betrifft die vorliegende Erfindung ein Verfahren zum Betrieb einer Getränkezubereitungsvorrichtung nach dem Oberbegriff des Anspruchs 7.

Aus dem Stand der Technik sind verschiedene Arten von Getränkezubereitungsvorrichtungen und Verfahren zu deren Betrieb bekannt. Sehr verbreitet sind Kaffeemaschinen in unterschiedlichen Ausgestaltungen. Es existieren jedoch auch Teezubereitungsvorrichtungen und auch andere Zubereitungsvorrichtungen für weitere Getränke. Bei verschiedenen Gattungen von Getränkezubereitungsvorrichtungen, insbesondere bei Kaffee- oder Teezubereitungsvorrichtungen kommen regelmäßig Getränkesubstrate zum Einsatz, die vollständig oder wenigstens teilweise organischen Ursprungs sind. Diese Getränkesubstrate, wie beispielsweise Tee, insbesondere getrocknete Teeblätter, Kaffeebohnen oder Kaffeebohnenmehl, gegebenenfalls ergänzt durch Zusätze, wie beispielsweise Aromen, Milchpulver oder dergleichen, werden bei Getränkezubereitungsvorrichtungen im Stand der Technik oft mit einem Brühfluid, beispielsweise Wasser versetzt, ausgelaugt oder aufgebrüht. Vorliegend sollen, auch wenn von Brühfluid die Rede ist, auch solche Getränke und Getränkezubereitungsvorrichtungen von der vorliegenden Offenbarung, insbesondere von der nachfolgend offenbarten Erfindung, umfasst sein, bei denen das Brühfluid kalt oder unerhitzt zum Einsatz kommt. Zum Abschluss eines Getränkezubereitungsprozesses, mitunter auch als Getränkebezug bezeichnet, bleibt in gattungsgemäßen Getränkezubereitungsvorrichtungen, insbesondere bei sogenannten Vollautomaten oftmals das Getränkesubstrat in der Getränkezubereitungsvorrichtung zurück oder wird dort zumindest übergangsweise gelagert, also zwischengelagert. Dazu kommen regelmäßig Auffangbehälter im Inneren oder innerhalb eines Gehäuses der Getränkezubereitungsvorrichtung zum Einsatz, in denen das Getränkesubstrat aufgefangen und bevorratet wird. Diese werden, gerade bei Kaffee- und/oder Espressomaschinen mitunter auch als Tresterschale oder Tresterbehälter bezeichnet. Die Auffangbehälter sind regelmäßig entnehmbar ausgestaltet, um Getränkesubstrat zu entsorgen.

Die Umweltbedingungen in einer solchen Getränkezubereitungsvorrichtung bieten leider optimale Bedingungen für das Wachstum von Pilzen, insbesondere Schimmelpilzen. Diese wiederum können negative Auswirkungen auf die Hygiene der Getränkezubereitungsvorrichtung und auch auf die Hygiene und Qualität der erzeugten Getränke haben. Denn im Inneren von bekannten Getränkezubereitungsvorrichtungen ist es oftmals dunkel, warm, feucht und das - zumindest zwischengelagerte - Getränkesubstrat bietet, insbesondere mit seinen organischen Bestandteilen, einen geeigneten Nährboden für Pilze, insbesondere Schimmelpilze. Ein Pilzwachstum lässt sich zum Beispiel effektiv dadurch vermeiden, dass das Getränkesubstrat, insbesondere Tee(blätter) und/oder Kaffeebohnenmehl, sowie das mitunter ebenfalls in der Getränkezubereitungsvorrichtung zwischengelagerte Restfluid, bevorzugt Restwasser, innerhalb von kurzen und entsprechend regelmäßigen Zeitintervallen entfernt, insbesondere geleert, werden. Beispielsweise ist bei einer täglichen Entleerung eine effektive und nachhaltige Vermeidung der Ansiedlung und Ausbreitung von Pilzen, insbesondere Schimmelpilzen möglich.

Es hat sich jedoch herausgestellt, dass in der Praxis, insbesondere aber keinesfalls ausschließlich bei der Benutzung von Getränkezubereitungsvorrichtungen in Privathaushalten, eine derart regelmäßige Entleerung des Auffangbehälters für Getränkesubstrat sowie gegebenenfalls eines weiteren Auffangbehälters für Restfluid nicht die Regel, sondern vielmehr sogar die Ausnahme des Nutzungsverhaltens darstellt, selbst wenn die Hersteller der Getränkezubereitungsvorrichtungen diese Intervalle vorsehen und empfehlen.

Eine besondere Problematik entsteht dadurch, dass eine "Infektion" der Getränkezubereitungsvorrichtung mit einem Pilz, insbesondere einem Schimmelpilz schlecht bis überhaupt nicht reversibel oder ausräumbar ist. Hat sich der Pilz, insbesondere der Schimmel, ein erstes Mal etablieren und ausbreiten können, verteilen sich dessen Sporen in Form einer Wolke an unterschiedlichsten Stellen im Innenraum der Getränkezubereitungsvorrichtung und begünstigen ein erneutes Pilzwachstum und/oder Schimmelwachstum. Nach einer Kontamination ist der Ursprungszustand der Getränkezubereitungsvorrichtung praktisch kaum wieder herstellbar. Es bestehen zwar allgemein bekannte Vorgehensweisen, zum Dekontaminieren von Pilzbefall oder Schimmelbefall, diese eignen sich aber nicht im Zusammenhang mit den bekannten Getränkezubereitungsvorrichtungen, weil diese entweder die Funktion der Getränkezubereitungsvorrichtung beeinträchtigen würden oder einen enormen Wartungsaufwand darstellen.

Beispielsweise würde ein Erwärmen von Teilen der Getränkezubereitungsvorrichtung, wie beispielsweise einer Brüheinheit, Pilzsporen oder Schimmelsporen abtöten, die notwendigen Temperaturen würden mit hoher Wahrscheinlichkeit aber auch dazu führen, dass sich die erwärmten Bauteile deformieren und so die Funktionalität eingeschränkt oder zerstört werden würde. Auch bekannte Desinfektionsmittel, wie beispielsweise Alkohol, die zum Abtöten oder Entfernen von Pilzsporen eingesetzt werden, könnten im Inneren einer Getränkezubereitungsvorrichtung nur dann effektiv eingesetzt werden, wenn diese weitgehend zerlegt werden würden.

Außerdem ist aus dem Stand der Technik bereits ein Ansatz bekannt, in dem eine Wasserverdunstung in einem Auffangbehälter betrieben wird, um dann lokal durch den Wasserdampf so hohe Temperaturen zu generieren, dass eine Schimmelbildung vermieden und/oder Schimmelsporen abgetötet werden. Ein solcher Ansatz, der beispielsweise in der WO 2020/109040 A1 beschrieben wird, hat jedoch den Nachteil, dass dieser technisch komplex und zudem sehr energieintensiv ist.

Ein weiter Ansatz geht aus der EP 3 027 095 A1 hervor. Darin wird eine Lösung beschrieben, bei der eine Einweg-Alufolie zum Einsatz kommt, mit der die Entfernung von Schimmel aus dem Auffangbehälter verbessert oder erleichtert werden soll. Diese Lösung adressiert aber nur die Symptomatik eines Pilzbefalls oder einer Pilzkontamination, kann jedoch im Hinblick auf die nach wie vor bestehende Sporenkontamination im Inneren der Getränkezubereitungsvorrichtung keine Abhilfe schaffen.

Ausgehend von dem beschriebenen Stand der Technik ist es folglich die Aufgabe der vorliegenden Erfindung eine Getränkezubereitungsvorrichtung sowie ein Verfahren zum Betrieb einer Getränkezubereitungsvorrichtung vorzuschlagen, die zuverlässig eine Kontamination und/oder Ausbreitung von Pilzen, insbesondere Schimmelpilzen, in gattungsgemäßen Getränkezubereitungsvorrichtungen vermeidet.

Die Aufgabe wird hinsichtlich der Getränkezubereitungsvorrichtung mit den Merkmalen des Anspruchs 1 gelöst. Bezüglich eines Verfahrens zum Betrieb einer Getränkezubereitungsvorrichtung wird die Aufgabe mit einem Verfahren mit den Merkmalen des Anspruchs 7 gelöst.

Vorteilhafte Ausführungsformen der Erfindung sind Gegenstand der nachfolgenden Beschreibung, Figurenbeschreibung, der Figuren sowie der Unteransprüche.

Grundsätzlich, insbesondere zur Vermeidung von unnötigen Wiederholungen, sollen nachfolgend alle vorrichtungsmäßig offenbarten Merkmale auch als verfahrensmäßig offenbart und beanspruchbar gelten, sowie umgekehrt.

Die Getränkezubereitungsvorrichtung im Sinne der vorliegenden Erfindung umfasst einen Auffangbehälter für, insbesondere loses oder portioniertes, feuchtes Getränkesubstrat. Der Auffangbehälter weist dabei eine Öffnung oder Öffnungsflächen auf. Die Öffnung oder die Öffnungsflächen sorgen dafür, dass der Auffangbehälter mit einem Innenraum der Getränkezubereitungsvorrichtung in Verbindung steht und dadurch bevorzugt feuchtes Getränkesubstrat nach einem Getränkebezug oder Getränkeherstellungsprozess in den Auffangbehälter überführbar sind. Bevorzugt erfolgt die Überführung von einer Brüheinheit in den Auffangbehälter.

Erfindungsgemäß ist dabei vorgesehen, dass der Öffnung oder den Öffnungsflächen ein, bevorzugt elektromechanischer, Aktor zugeordnet vorgesehen ist, der dazu eingerichtet ist eine Luftströmung an der Öffnung oder an den Öffnungsflächen zu erzeugen.

Die Erfindung hat erkannt, dass eine, wenn auch geringe, Luftströmung an der Öffnung oder den Öffnungsflächen des Auffangbehälters ausreicht, um über das natürliche Sättigungsverhalten von Frischluft dem feuchten Getränkesubstrat Feuchtigkeit zu entziehen. Besonders vorteilhaft kann dieser Effekt bei porösen Getränkesubstraten, wie beispielsweise Kaffeebohnenmehl, eingesetzt werden, weil der Wassertransfer bei diesen Getränkesubstraten durch den Kapillareffekt noch weiter unterstützt wird.

Die Erfindung basiert folglich auf der Grundidee, dass mit einem verhältnismäßig geringen technischen Aufwand, der sowohl technisch leicht zu realisieren ist und zudem nur äußerst wenig Energie im Betrieb verbraucht, eine effektive Schimmelvermeidung oder Pilzvermeidung erreicht werden kann, wenn die Öffnung oder die Öffnungsflächen des Auffangbehälters einem entsprechenden Luftstrom ausgesetzt sind oder von einem Luftstrom überströmt werden.

Als erfindungsgemäße Getränkezubereitungsvorrichtung kommen, wie eingangs bereits dargestellt, unterschiedliche Getränkezubereitungsvorrichtungen, beispielsweise Kaffee- und/oder Espressomaschinen, Teemaschinen oder dergleichen infrage. Die Erfindung kann dabei vorteilhaft sowohl bei solchen Geräten oder Systemen zum Einsatz kommen, bei denen das Getränkesubtrat lose als auch vorportioniert, beispielsweise in Form von Kapseln, Pots, Pads oder dergleichen zum Einsatz kommt.

Die Öffnung oder die Öffnungsflächen können entweder auch zu dem Zweck vorgesehen sein, um feuchtes Getränkesubstrat nach einem Getränkebezug oder einem Getränkeherstellungsprozess, bevorzugt aus einer Brüheinheit, in den Auffangbehälter zu überführen. Alternativ oder zusätzlich können jedoch auch Öffnungen oder Öffnungsflächen vorgesehen sein, die hauptsächlich oder ausschließlich dazu dienen, dass über die Öffnung oder Öffnungsflächen eine Luftströmung unmittelbar oder mittelbar auf das feuchte Getränkesubstrat im Inneren des Auffangbehälters einwirken und die dortige Sättigung mit Feuchtigkeit zu beeinflussen.

Als Öffnungen oder Öffnungsflächen, die vorrangig oder ausschließlich zur Anströmung mit einem Luftstrom dienen, können beispielsweise gelochte Oberflächen, mit einem Netz versehene Oberflächen oder mit einer feuchtigkeitspermeablen Membran versehene Oberflächen des Auffangbehälters verwendet werden.

Vorteilhaft ist die Getränkezubereitungsvorrichtung als Vollautomat ausgebildet und umfasst wenigstens einen Teil der nachfolgend genannten Komponenten oder Baugruppen: einen Frischwasserbehälter, bevorzugt mitsamt Wasserfilter, eine Substratbevorratungseinheit, bevorzugt einen Bohnenbehälter, eine Mahleinheit, eine Heizvorrichtung, eine, bevorzugt entnehmbare, Brüheinheit, ein Milchmodul mit Mitteln zum Ansaugen, Erwärmen und/oder Aufschäumen von Milch, einen Restwasserbehälter.

Ein besonderer Vorteil der Erfindung liegt darin, dass die Wahrscheinlichkeit einer Pilzkontamination von vornherein minimiert wird und es damit überhaupt nicht zu der Situation kommt, in der sich Sporen in der Getränkezubereitungsvorrichtung ansammeln oder ausbilden können.

In einer ersten, vorteilhaften Ausgestaltung der Getränkezubereitungsvorrichtung kann vorgesehen sein, dass der Aktor dauerbetriebsfähig ausgebildet ist, solange eine Netzverbindung der Getränkezubereitungsvorrichtung zu einem elektrischen Versorgungsnetz besteht. Mit anderen Worten ausgedrückt bedeutet dies, dass der Aktor, insbesondere im Hinblick auf die elektrische Versorgung und/der Verschaltung so ausgebildet und/oder mit einem Netzteil der Getränkezubereitungsvorrichtung verbunden ist, dass der Aktor auch noch betreibbar oder betriebsfähig ist, wenn beispielsweise ein Gerätehauptschalter der Getränkezubereitungsvorrichtung deaktiviert wurde und die Getränkezubereitungsvorrichtung sich folglich nicht mehr in einem betriebsbereiten Zustand befindet, sondern in einem "Standby-Zustand" befindlich ist. Dies ist besonders vorteilhaft, weil sich im Rahmen der Erfindung herausgestellt hat, dass zwar schon verhältnismäßig kleine und auch sehr kleine Luftströmungen im Bereich der Öffnung und/oder im Bereich der Öffnungsflächen ausreichend sind, um eine Entfeuchtung des Getränkesubstrats zu bewirken, dass aber eine vergleichsweise lange Zeit oder Zeitspanne nötig ist, um die Entfeuchtung oder Trocknung soweit voranzutreiben, dass eine Pilzkontamination und/oder Schimmelkontamination verhindert wird. Da es bei gattungsgemäßen Getränkezubereitungsvorrichtungen oftmals vorgesehen ist, dass die Getränkezubereitungsvorrichtung automatisch nach einem letzten Getränkebezug, beispielsweise 5 Minuten nach einem Getränkebezug oder 10 Minuten nach einem Getränkebezug, in den "Standby-Zustand" versetzt wird, ist es besonders vorteilhaft, wenn auch im "Standby-Zustand" der Aktor weiter betriebsfähig bleibt und betrieben wird, um auch in diesem Zustand der Getränkezubereitungsvorrichtung die Entfeuchtung des Getränkesubstrats weiter voranzutreiben. Vorteilhaft kann der Aktor über mehrere Stunden, gegebenenfalls sogar über mehrere Tage aktiviert bleiben, solange eine elektrische Verbindung oder Netzverbindung der Getränkezubereitungsvorrichtung zu einem elektrischen Versorgungsnetz bestehen bleibt. Vorteilhaft kann der Dauerbetrieb des Aktors einen Zeitraum von 1 bis 4 Tage oder etwa 24 Stunden bis 100 Stunden betragen, insbesondere wenn in der Zwischenzeit keine Zugriff auf oder Entleerung des Auffangbehälters stattfindet und/oder erkannt wird, wie nachfolgend noch im Detail beschrieben werden wird.

In einer weiteren, besonders vorteilhaften Ausgestaltung der Getränkezubereitungsvorrichtung kann vorgesehen sein, dass der Aktor im Betrieb, bevorzugt in einem Dauerbetrieb, eine elektrische Leistungsaufnahme von bis zu 0,4 Watt, bevorzugt von bis zu 0,3 Watt aufweist. Es hat sich überraschend gezeigt, dass Aktoren mit einer entsprechend geringen Leistungsaufnahme trotzdem in der Lage sind oder geeignet sind eine ausreichende Luftströmung zu erzeugen, die das stetige Entfeuchten es Getränkesubstrats befördern und damit eine Voraussetzung zur Vermeidung von Pilzkontaminationen, insbesondere Schimmelkontaminationen, darstellen. Besonders überraschend wurde sogar ermittelt, dass die Trocknungs-Effizienz bei steigender Leistungsaufnahme nicht, wie intuitiv erwartet, zunimmt oder konstant bleibt, sondern sogar ein degressives Verhalten zeigt. Eine entsprechend geringe elektrische Leistungsaufnahme ist auch deshalb von Vorteil, weil dadurch gemäß aktueller gesetzlicher Energienormen der Aktor selbst im Aus-Zustand oder im "Standby-Zustand" der Getränkezubereitungsvorrichtung aktiv oder eingeschaltet bleiben kann.

Eine weitere, besonders vorteilhafte Ausgestaltung der Getränkezubereitungsvorrichtung sieht eine Steuereinrichtung, insbesondere eine zentrale Recheneinheit vor, die zur Protokollierung von Getränkezubereitungen oder Getränkebezügen eingerichtet ist und die datentechnisch mit Erfassungsmitteln, bevorzugt elektrischen Kontakten, Schaltern und/oder Sensoren verknüpft ist, mittels derer ein Zugriff auf den und/oder eine Entnahme des Auffangbehälters erfassbar oder plausibilisierbar ist, wobei die Steuereinrichtung ferner zur Steuerung des Aktors eingerichtet ist und eine Aktivierung, insbesondere einschließlich einer, bevorzugt ununterbrochenen, Betriebsdauer des Aktors abhängig von protokollierten Getränkezubereitungen und abhängig vom Zugriff auf den und/oder die Entnahme des Auffangbehälters steuerbar ist.

Als Steuereinrichtung, insbesondere zentrale Recheneinheit, kann eine Steuereinheit dienen, die auch die sonstige Steuerung der Getränkezubereitungsvorrichtung verantwortet oder betreibt. Die Protokollierung von Getränkezubereitungen kann beispielsweise über einen Speicher erfolgen, der entweder intern oder extern zur Steuereinrichtung als Teil der Getränkezubereitungsvorrichtung ausgebildet sein kann. Die Protokollierung kann beispielsweise aber keinesfalls zwingend einen absoluten oder relativen Zeitpunkt der Getränkezubereitung, eine gemessene oder berechnete Menge an Getränkesubstrat der Getränkezubereitung und eventuell weitere Zubereitungs- und/oder Umgebungsparameter, wie beispielsweise Umgebungstemperatur, Umgebungsluftfeuchtigkeit - relativ oder absolut - umfassen. Die datentechnischen Erfassungsmittel, die zur Erfassung eines Zugriffs auf den Auffangbehälter und/oder einer Entnahme des Auffangbehälters, besonders bevorzugt sogar eine Entleerung des Auffangbehälters erfassbar oder plausibilisierbar machen, können in grundsätzlich unterschiedlicher Art und Weise ausgebildet sein. Beispielsweise können bekannte und gattungsgemäße REED-Kontakte zum Einsatz kommen, um festzustellen, ob ein Restwasserbehälter oder eine Tropfschale zusammen mit dem Auffangbehälter geöffnet und/oder entnommen wurde. Dabei kann beispielsweise auch der Zeitraum erfasst werden, während dem die dazugehörige Kontaktierung unterbrochen ist/war. Es kann aber auch möglich sein, dass der Zugriff und/oder die Entnahme, insbesondere einschließlich einer Entleerung, des Auffangbehälters direkt und unmittelbar erfasst oder gemessen wird. Dazu können beispielsweise Sensoren in Form eines Gewichtsensors - Waage - optische oder strahlenbasierte Sensoren, beispielsweise in Form von Lichtschranken, 3D-Kameras oder dergleichen zum Einsatz kommen. Auch eine Feuchtigkeitsmessung in oder an dem Auffangbehälter kann als Erfassungsmittel zum Einsatz kommen.

Durch die Protokollierung der Getränkezubereitungen auf der einen Seite und die Kenntnis oder Plausibilisierung des Zustandes des Auffangbehälters, insbesondere der Füllung des Auffangbehälters mit Getränkesubstrat, andererseits lässt sich in einfacher und effektiver Weise die Aktivierung des Aktors steuern. Wenn beispielsweise nach einem einzelnen Getränkebezug oder einer einzelnen Getränkezubereitung oder nach mehreren Getränkezubereitungen kein Zugriff und/oder keine Entnahme des Auffangbehälters erfassbar oder plausibilisierbar ist, dann kann der Aktor aktiviert werden und beispielsweise in Abhängigkeit von der Anzahl der Getränkezubereitungen, gegebenenfalls auch unter Berücksichtigung der jeweiligen Menge von Getränkesubstrat, eine ununterbrochene Betriebsdauer des Aktors bestimmt oder anhand von vorgegebenen Formeln berechnet werden. Der Aktor bleibt dann solange aktiv, bis entweder die Betriebsdauer abgelaufen ist, die Getränkezubereitungsvorrichtung vom elektrischen Versorgungsnetz getrennt wird, oder eine Entnahme und/oder ein Zugriff auf den Auffangbehälter, bevorzugt zusammen mit einer Entleerung des Auffangbehälters, erfasst wird oder anhand der Erfassungsmittel als plausibel angenommen werden kann.

In einer weiteren, besonders vorteilhaften Ausgestaltung der Getränkezubereitungsvorrichtung kann vorgesehen sein, dass mittels einer, bevorzugt, akustischen und/oder optischen Ausgabeeinheit, die von der Steuereinrichtung ansteuerbar ist, ein akustisches oder optisches Signal ausgehbar ist, wenn und/oder solange der Aktor aktiviert wird oder aktiviert ist. Dies kann beispielsweise derart erfolgen, dass in einem Betriebszustand, in dem die Steuereinrichtung den Aktor bereits aktiviert hat oder aktuell aktiviert die Ausgabeeinheit, beispielsweise eine energiesparende optische Ausgabeeinheit in Form einer LED, den Bediener oder Benutzer signalisiert, dass eine Entnahme und/oder Entleerung des Auffangbehälters vorteilhaft wäre und dass, solange die Entnahme und/oder Entleerung des Auffangbehälters nicht erfolgt der Aktor weiter in Betrieb bleibt, vorausgesetzt eine bestimmte oder berechnetet Betriebsdauer ist nicht abgelaufen. Diese Ausgestaltung hat den Vorteil, dass der Benutzer darauf aufmerksam gemacht werden kann, dass zur Vermeidung eines längerfristigen Dauerbetriebs des Aktors eine Entnahme und/oder Entleerung des Auffangbehälters sinnvoll ist. Gleichzeitig hat die Ausgestaltung den Vorteil, dass über die Ausgabeeinheit, die aufgrund der geringen elektrischen Leistungsaufnahme auch entsprechend leise betrieben werden kann, der Benutzer oder Bediener überhaupt erst informiert wird, dass der Aktor aktuell in Betrieb ist oder in Betrieb genommen wird.

Der Begriff der Ausgabeeinheit der vorliegenden Beschreibung soll so verstanden werden, dass ein aktive Ausgabe optischer oder akustischer Art erzeugbar ist, die wiederum von einem Nutzer oder Bediener wahrnehmbar ist. Es sollen also Einheiten als Ausgabeeinheiten verstanden werden, die zur eigenständigen Erzeugung eines akustischen und/oder optischen Wellensignals eingerichtet sind. Mit anderen Worten ausgedrückt bedeutet dies, dass die Ausgabeeinheit ein Ton- und/oder Lichtsignal erzeugt und abgibt. Zum Beispiel kann ein Lautsprecher, ein Körperschallwandler, ein Summer oder ein Leuchtmittel, wie etwa eine LED, als Ausgabeeinheit verstanden werden. Als Abgrenzung zur Ausgabeeinheit soll eine mitunter optisch wahrnehmbare Messeinrichtung verstanden werden. Als solche Messeinrichtung kommt zum Beispiel ein Schwimmer, Schwimmkörper, Auftriebskörper oder Sichtfenster mit Skala in Frage, die beispielsweise auf einer Flüssigkeitsoberfläche schwimmen oder trieben oder den Stand der Flüssigkeitsoberfläche erkennbar machen. Derartige Messeinrichtungen sind zwar optisch durch einen Nutzer oder Bediener wahrnehmbar erzeugen aber keine Ausgabe, insbesondere kein Ton- und/oder Lichtsignal und sollen daher nicht als Ausgabeeinheiten verstanden werden.

In einer weiteren, besonders vorteilhaften Ausgestaltung der Getränkezubereitungsvorrichtung kann vorgesehen sein, dass der Aktor angrenzend an den Auffangbehälter, bevorzugt an oder über einem Rand des Auffangbehälters, der die Öffnung oder eine Öffnungsfläche begrenzt, angeordnet ist. Dies erlaubt die vorteilhafte Minimierung von Zuluft- und Abluftkanälen und erreicht zudem, dass die wirksamen Strömungsquerschnitte so groß wie möglich gestaltet werden. Dadurch wird der Strömungswiderstand insgesamt verringert und die Wasseraustragsleistung oder Entfeuchtungsleistung verbessert. Bevorzugt ist ein Abluftkanal oder eine Abluftleitung, bevorzugt auch eine Zuluftleitung oder ein Zuluftkanal, die eine Wirkfläche des Aktors, zum Beispiel eine Rotationsfläche eines Rotors oder Lüfters, vom Auffangbehälter trennt/trennen, gerade ausgebildet, dass der Aktor und/oder dessen Wirkfläche soweit beabstandet oder so nah an der Öffnungsfläche oder der Öffnung des Auffangbehälters angeordnet ist, dass eine Bildung oder Ansammlung von Kondenswasser auf oder in dem Aktor vermieden wird, insbesondere wenn der Aktor nicht aktiv ist. Bevorzugt kann ein Strömungswiederstand minimiert sein.

Die oben genannte Aufgabe wird auch durch ein Verfahren zum Betrieb einer Getränkezubereitungsvorrichtung mit einem Auffangbehälter für, insbesondere loses oder portioniertes, feuchtes Getränkesubstrat, welche eine Öffnung oder Öffnungsfläche aufweist gelöst. Erfindungsgemäß sind dabei die folgenden Verfahrensschritte vorgesehen:
Erkennen und/oder Überwachen von einer Anwesenheit und/oder einem Füllungszustand von feuchtem Getränkesubstrat in dem Auffangbehälter.

Aktivieren eines bevorzugt elektromechanischen Aktors der der Öffnung oder Öffnungsflächen zugeordnet ist, wodurch eine Luftströmung an der Öffnung oder den Öffnungsflächen erzeugt wird, wobei die Aktivierung des Aktors in Abhängigkeit einer Erkennung von feuchtem Getränkesubstrat in dem Auffangbehälter stattfindet.

Dadurch wird in vorteilhafterweise die Kontamination der Getränkezubereitungsvorrichtung mit Pilzen, insbesondere mit Schimmelpilzen von vornherein vermieden und somit folglich auch eine anschließende Problematik der Kontamination mit Schimmelsporen oder Pilzsporen verhindert.

Darüber hinaus wird hinsichtlich der Vorteile, vorteilhaften Wirkungen und Leistungen des erfindungsgemäßen Betriebsverfahrens auf die vorangehende Offenbarung zur erfindungsgemäßen Getränkezubereitungsvorrichtung verwiesen.

In einer vorteilhaften Ausführungsform des Verfahrens kann vorgesehen sein, dass der Aktor dauerhaft oder für eine vorgegebene Dauer aktiviert bleibt, solange eine Netzverbindung der Getränkezubereitungsvorrichtung zu einem elektrischen Versorgungsnetz besteht und die Erkennung von feuchtem Getränkesubstrat in dem Auffangbehälter besteht. Wie oben bereits beschrieben, kann der Aktor in einem Dauerbetrieb, bevorzugt auch im "Standby-Zustand", über mehrere Stunden oder gar über 24 bis 100 Stunden andauern, solange die Getränkezubereitungsvorrichtung mit dem elektrischen Versorgungsnetz verbunden ist und solange ein Zugriff auf den Auffangbehälter und/oder eine Entnahme des Auffangbehälters nicht erfasst oder plausibilisiert wurde und dem nach wie vor von der Anwesenheit von feuchtem Getränkesubstrat im Auffangbehälter ausgegangen werden kann oder ausgegangen werden muss.

In einer vorteilhaften Ausführungsform des Verfahrens kann vorgesehen sein, dass der Aktor im Betrieb, bevorzugt in einem Dauerbetrieb, mit einer elektrischen Leistungsaufnahme von bis zu 0,4W, bevorzugt von bis zu 0,3W, betrieben wird. Dadurch wird ein besonders leiser und/oder energiesparender Betrieb und ein Dauerbetrieb im "Standby-Zustand" in Übereinstimmung mit den gesetzlichen Energienormen ermöglicht.

In einer weiteren, besonders vorteilhaften Ausgestaltung des Verfahrens kann vorgesehen sein, dass im Rahmen der Erkennung und/oder Überwachung der Anwesenheit und/oder dem Füllungszustand von feuchtem Getränkesubstrat im Auffangbehälter eine Steuereinrichtung, insbesondere eine zentrale Recheneinheit, der Getränkezubereitungsvorrichtung Getränkezubereitungen protokolliert, wobei mittels Erfassungsmitteln, bevorzugt elektrischen Kontakten, Schaltern und/oder Sensoren, die datentechnisch mit der Steuereinrichtung verknüpft sind, ein Zugriff auf den und/oder eine Entnahme des Auffangbehälters erfasst oder plausibilisiert wird, wobei die Steuereinrichtung ferner den Aktor steuert und den Aktor aktiviert, insbesondere eine, bevorzugt ununterbrochene, Betriebsdauer des Aktors, abhängig von protokollierten Getränkezubereitungen und Zugriff auf und/oder Entnahme des Auffangbehälters steuert.

Wie oben bereits beschrieben, kann die Information aus der Protokollierung der Getränkezubereitung und der Erfassung oder der Plausibilisierung eines Zugriffs auf den und/oder eine Entnahme des Auffangbehälters, insbesondere in Verbindung mit einer Entleerung des Auffangbehälters, besonders vorteilhaft genutzt werden kann um festzustellen, ob die Aktivierung des Aktors sinnvoll ist und wie lange der Aktor, bevorzugt ununterbrochen, betrieben werden soll/muss um möglichst effektiv eine Entfeuchtung des Getränkesubstrats zu ermöglichen und damit eine Pilzkontamination, insbesondere Schimmelpilzkontamination zu vermeiden. Auch kann so ein besonders sinnvolles Kriterium für die Deaktivierung des Aktors generiert werden, nämlich immer dann, wenn ein Zugriffs auf den und/oder eine Entnahme des Auffangbehälters, insbesondere in Verbindung mit einer Entleerung des Auffangbehälters, erfasst oder plausibilisiert wird.

In einer weiteren besonders vorteilhaften Ausgestaltung des Verfahrens kann eine, bevorzugt akustische und/oder optische, Ausgabe über eine Ausgabeeinheit erfolgen, wobei die Ausgabeeinheit von der Steuereinrichtung angesteuert wird und wobei die Ausgabe in Form eines akustischen und/oder optischen Signals ausgegeben wird, wenn und/oder solange der Aktor aktiviert wird/ist.

Dadurch kann in vorteilhafterweise dem Benutzer oder Bediener angezeigt werden, dass der Aktor im Betrieb ist und dass gegebenenfalls eine Entnahme und/oder Entleerung des Auffangbehälters vorteilhaft wäre, um einerseits den Betrieb des Aktors überflüssig zu machen und/oder andererseits die Pilzkontamination noch effektiver zu vermeiden.

In einer weiteren, besonders vorteilhaften Ausgestaltung des Verfahrens kann vorgesehen sein, dass der Aktor aktiviert bleibt, bis ein Wasseranteil weniger als 65 Gew.-%, bevorzugt weniger als 60 Gew.-% einer Trockenmasse des Getränkesubstrats beträgt. Die Wasseranteil des Getränkesubstrats kann geschätzt oder approximiert werden, wobei dann in der Regel, die bevorzugt ununterbrochene, Betriebsdauer des Aktors deutlich größer festgelegt wird, um sicherzustellen, dass der gewünschte Wert der Restfeuchte sicher erreicht wird. Alternativ kann auch vorgesehen sein, dass die Restfeuchte des Getränkesubstrats über Messmittel gemessen wird. Beispielsweise kann vorgesehen sein, dass die Messmittel, die zur Messung der Restfeuchte des Getränkesubstrats verwendet werden auch gleichzeitig als Erfassungsmittel fungiert, die die Anwesenheit von feuchtem Getränkesubstrat in dem Auffangbehälter ermitteln und/oder plausibilisieren.

In einer weiteren, besonders wünschenswerten Ausgestaltung des Verfahrens kann vorgesehen sein, dass der Aktor aktiviert bleibt, wenn die Getränkezubereitungsvorrichtung, insbesondere selbsttätig, aus einem aktiven Zustand oder betriebsbereiten Zustand in einen Standby-Zustand überführt wird. Alternativ kann vorgesehen sein, dass die Aktivierung stattfindet, wenn aus einem aktiven Zustand oder betriebsbereiten Zustand in einen Standby-Zustand gewechselt wird. Dies hat den Vorteil, dass eine stetige Abfuhr von Feuchtigkeit über die lokale Sättigung von Frischluft mit Feuchtigkeit erreicht werden kann, die zwar langsam aber stetig die Grundlage für eine Pilzkontamination, insbesondere eine Schimmelpilzkontamination entzieht oder entfernt und keinen Einfluss auf den sonstigen Betrieb der Getränkezubereitungsvorrichtung hat.

Die Erfindung wird nachfolgend anhand von, rein schematischen, lediglich Ausführungsbeispiele darstellenden Figuren beispielhaft erläutert.

Darin zeigen:
- Fig. 1:: eine schematische Darstellung einer erfindungsgemäßen Getränkezubereitungsvorrichtung;
- Fig. 2:: eine beispielhafte Darstellung eines Ablaufschemas eines erfindungsgemäßen Verfahrens.

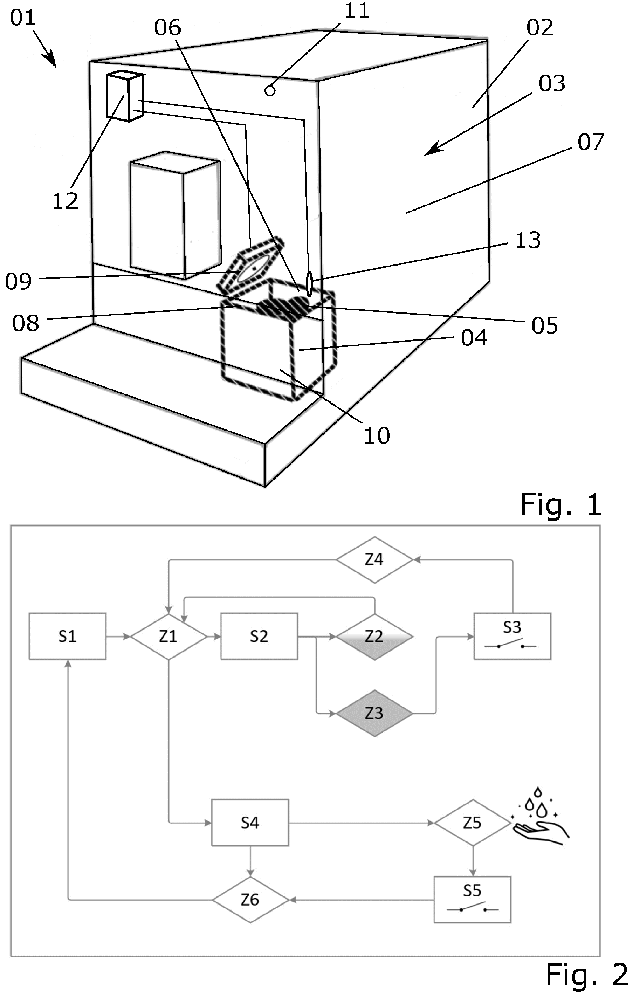

Fig. 1 zeigt eine schematische Getränkezubereitungsvorrichtung 01. Die Getränkezubereitungsvorrichtung 01 ist mit einem transparenten Gehäuse 02 dargestellt, das einen Blick ins Innere der Getränkezubereitungsvorrichtung 01 ermöglicht. Aus Gründen der Übersichtlichkeit sind ein Großteil der Komponenten in einem Innenraum 03 des Gehäuses 02 nicht dargestellt. So sind zum Beispiel eine Brüheinheit, ein Fluidsystem einschließlich eines Fluidbevorratungsbehälters und eines Fluidauffangbehälters, ein Getränkesubstratvorratsbehälter, eine Mahleinheit und dergleichen nicht im Detail dargestellt.

Im Innenraum 03 des Gehäuses 02 ist ein Auffangbehälter 04 angeordnet in dem feuchtes Getränkesubstrat 05 zwischengelagert oder bevorratet wird. Das feuchte Getränkesubstrat 05, was beispielsweise aufgebrühtes oder ausgelaugtes Kaffeebohnenmehl enthalten oder aufweisen kann, wird regelmäßig von einer Brüheinheit nach einem Brühprozess oder einer Getränkezubereitung ausgeworfen oder ausgegeben und gelangt von der Brüheinheit in den Auffangbehälter 04. Der Auffangbehälter 04 umfasst eine Öffnung 06. Die Öffnung 06 dient auch zur Aufnahme oder Überführung des Getränkesubstrats 05 in den Auffangbehälter 04.

Der Auffangbehälter 04 könnte alternativ oder zusätzlich im Bereich von Seitenflächen 07 weitere Öffnungsflächen umfassen, die einen Luft- und/oder Feuchtigkeitsaustausch ermöglichen. Dazu könnten beispielsweise in den Seitenflächen 07 feinmaschige Netze, Gitter, oder luft- und/oder wasserpermeable oder semipermeable Membranen vorgesehen sein.

Im Bereich eines Rands 08 der Öffnung 06, im Beispiel der Figur 1 oberhalb der Öffnung 06 und oberhalb des Auffangbehälters 04, ist ein Aktor 09 angeordnet. Der Aktor 09 kann bevorzugt ein elektromechanischer Aktor sein. In der Fig. 1 ist der Aktor 09 beispielsweise als Lüfter oder Ventilator ausgestaltet. Der Aktor 09 kann alternativ oder zusätzlich auch als Pumpe, Turbine, Fecher, als Vibrationselement oder als vergleichbares technisches Mittel ausgestaltet sein, welches die aktive Anregung einer Luftströmung an der Öffnung 06 erzeugt. Der Aktor 09 kann bevorzugt so mit einem nicht dargestellten Netzteil der Getränkezubereitungsvorrichtung 01 verbunden sein, dass der Aktor 09 dauerbetriebsfähig ist und über Stunden oder Tage, bevorzugt zwischen 24 und 100 Stunden in einem Dauerbetrieb betrieben werden kann, selbst wenn oder insbesondere wenn die Getränkezubereitungsvorrichtung 01 eine Netzverbindung mit einem elektrischen Versorgungsnetz aufweist, ansonsten aber ausgeschaltet ist oder in eine "Standby-Zustand" verharrt.

Über die Dauerbetriebsfähigkeit des Aktors 09 kann erreicht werden, dass mit minimalem Energieaufwand ein ständiger Luftaustausch im Bereich der Öffnung 06 des Auffangbehälters 04 stattfindet und über das natürliche Sättigungsverhalten von Luft oder Frischluft dem Getränkesubstrat 05 langsam aber stetig Feuchtigkeit entzogen wird und somit die Möglichkeit von Ansiedlung oder Ausbreitung von Pilzkontaminationen, insbesondere Schimmelpilzkontaminationen, von vornherein vermieden wird. Bevorzugt wird der Aktor 09 mit einer elektrischen Leistungsaufnahme von bis 0,4W, bevorzugt von bis zu 0,3W betrieben.

Durch die angrenzende Anordnung des Aktors 09 an dem Auffangbehälter 04, bevorzugt an oder über dem Rand 08 der Öffnung 06, wird ein spezieller Zuluftkanal oder Abluftkanal vermieden und der Strömungswiederstand minimiert. Dies führt dazu, dass die wirksamen Strömungsquerschnitte der Luftströmung, die durch den Aktor 09 erzeugt werden, so groß wie möglich ausfallen. Enge Passagen und lange Leitungen, die den Strömungswiderstand erhöhen und die Wasseraustragsleistung oder Entfeuchtung verringern würden, können entfallen. Gleichzeitig ist die Anordnung und/oder Ausrichtung des Aktors 09 so gewählt, dass eine Ansammlung oder Ablagerung von Kondenswasser auf oder in dem Aktor 09 vermieden wird.

In dem Gehäuse 02 können, wie gattungsgemäß bereits bekannt, in den Wandelementen 10 ebenfalls Öffnungen, beispielsweise Löcher, Schlitze oder Gitter vorgesehen sein, die ermöglichen, dass mit Feuchtigkeit angereicherte Luft vom Aktor aus dem Gehäuse gefördert wird und trockenere Luft vom Aktor 09 nachgefördert oder angesaugt wird.

Die Getränkezubereitungsvorrichtung 01 kann ferner eine Ausgabeeinheit 11 umfassen die dazu eingesetzt wird eine akustische und/oder optische Ausgabe zu erzeugen, wenn der Aktor 09 in Betrieb ist und/oder aktiviert wird. Besonders bevorzugt ist die Ausgabeeinheit ebenfalls mit einem sehr geringen elektrischen Verbrauch betreibbar, sodass auch wenn der Aktor 09 über längere Zeit, beispielsweise über 24 bis 100 Stunden, in Betrieb ist, der Betrieb der Ausgabeeinheit keinen merklichen Energieverbrauch verursacht. Beispielsweise kann die Ausgabeeinheit als sparsame optische Ausgabeeinheit, beispielsweise eine einzelne LED ausgefertigt oder ausgebildet sein. Dementsprechend kann sich die Ausgabeeinheit 11 von einer sonstigen Ausgabeeinheit, beispielsweise einem Bildschirm, unterscheiden, der im Betrieb der Getränkezubereitungsvorrichtung 01 für sonstige optische Ausgaben, und gegebenenfalls Eingaben, genutzt wird.

Die Getränkezubereitungsvorrichtung 01 kann ferner eine Steuereinrichtung 12 aufweisen, die beispielsweise einen Speicher umfasst, mit den Getränkezubereitungen protokolliert werden können. Zudem kann die Steuereinrichtung datentechnisch mit Erfassungsmitteln 13 verknüpft sein, die beispielsweise als elektrische Kontakte, Schalter und/oder Sensoren ausgebildet sein können, wobei die Erfassungsmittel dazu dienen einen Zugriff auf den Auffangbehälter 04 und/oder eine Entnahme des Auffangbehälters 04 zu erfassen oder zumindest zu plausibilisieren. Die Steuereinrichtung 12 kann zudem so mit dem Aktor 09 verbunden, insbesondere elektrisch und/oder datentechnisch verbunden sein, dass die Steuereinrichtung auch den Aktor 09 steuern kann. Zur Steuerung kann bevorzugt die Aktivierung, die Deaktivierung, eine Einschaltverzögerung und/oder die Vorgabe oder Berechnung einer Betriebsdauer, insbesondere einer ununterbrochenen Betriebsdauer, zählen.

Die Steuerung des Aktors 09 wird insbesondere abhängig von der Protokollierung von Getränkezubereitungen und dem Erfassen von Zugriffen auf den und/oder Entnahmen des Auffangbehälters 04 vorgenommen. So kann beispielsweise der Aktor 09 ausgeschaltet bleiben oder deaktiviert bleiben, solange festgestellt wird oder erfasst wird, dass der Auffangbehälter 04 leer ist und kein feuchtes Getränkesubstrat 05 enthält oder aufweist. Wird jedoch eine Getränkezubereitung protokolliert, und im Anschluss daran keine Entnahme des Auffangbehälters 04 oder ein Zugriff auf den Auffangbehälter 04 erfasst oder plausibilisiert, kann die Steuereinrichtung 12 den Aktor 09 aktivieren und dabei eine, bevorzugt ununterbrochene, Betriebsdauer vorgeben, die beispielsweise von der Anzahl der Getränkezubereitungen, der jeweiligen Menge an Getränkesubstrat der Getränkezubereitungen und weiteren Parametern wie beispielsweise einer Umgebungstemperatur, einer Umgebungsluftfeuchtigkeit und dergleichen abhängen kann.

Die Steuereinrichtung kann den Aktor 09 wieder deaktivieren, und/oder eine ununterbrochene Betriebsdauer auf null setzen oder zurücksetzen, sobald während des Betriebs des Aktors 09 über die Erfassungsmittel 13 festgestellt wird oder plausibilisiert wird, dass ein Zugriff auf den Auffangbehälter 04 stattgefunden hat.

Die Plausibilisierung eines Zugriffs auf den Auffangbehälter 04 oder einer Entnahme des Auffangbehälters 04 kann beispielsweise so erfolgen, dass der Auffangbehälter 04 zusammen mit einem nicht im Detail dargestellten Fluidauffangbehälter, bevorzugt einer Tropfschale oder einem Restwasserbehälter, über eine Art Schubladen-Lösung entnehmbar ist. Wenn die Erfassungsmittel 13 beispielsweise die Entnahme der Tropfschale erfassen und weiterhin festgestellt wird, dass die Tropfschale für eine gewisse Mindestzeit, beispielsweise 30 Sekunden, entnommen bleibt, kann davon ausgegangen werden, dass nicht nur die Tropfschale entnommen und gegebenenfalls geleert wurde, sondern dass im gleichen Zug auch die Entleerung des Auffangbehälters 04 stattgefunden hat und somit ein leerer Auffangbehälter nach Wiedereinsetzen der Restwasserschale oder Tropfwasserschale plausibel ist. Die Erfassungsmittel 13 können alternativ jedoch auch unmittelbar die Anwesenheit von Getränkesubstrat in dem Auffangbehälter überwachen oder erfassen, bevorzugt messen. Weiter alternativ oder zusätzlich kann die Plausibilisierung auch eine Eingabe eines Benutzers umfassen, mit der über eine Eingabeschnittstelle, beispielsweise ein Knopf oder ein Touchdisplay, bestätigt wird, dass die der Auffangbehälter 04 geleert wurde.

In der Fig. 2 ist ein beispielhafter Ablauf eines erfindungsgemäßen Betriebsverfahrens zum Betrieb einer Getränkezubereitungsvorrichtung dargestellt. Zu Beginn des Verfahrens liegt zum Beispiel ein normaler Standby-Zustand Z6vor, der erreicht wird, wenn die Getränkezubereitungsvorrichtung zwar mit einem elektrischen Versorgungsnetz verbunden ist, aber keine Getränkezubereitungen möglich sind. In einem ersten Verfahrensschritt S1 kann ausgehend von dem Standby-Zustand Z6über Betätigung eines Hauptschalters die Getränkezubereitungsvorrichtung in einen betriebsbereiten Zustand überführt werden. Dabei können beispielsweise Aufheizvorgänge, Spülvorgänge und dergleichen durchgeführt werden. Anschließend wir ein Zustand Z1 erreicht, in dem die Betriebsbereitschaft der Getränkezubereitungsvorrichtung gegeben ist. hergestellt. Anschließend kann beispielsweise in einem Verfahrensschritt S2 eine Getränkezubereitung erfolgen. Im Anschluss an die Getränkezubereitung des Verfahrensschritt S2 kann beispielsweise durch tatsächliches Messen/Erfassen oder durch Hochzählen oder Protokollieren der Getränkezubereitungen ermittelt oder abgeschätzt werden, ob ein Auffangbehälter teilweise mit Getränkesubstrat gefüllt ist oder bereits vollständig mit Getränkesubstrat gefüllt ist. Wenn der Auffangbehälter vollständig mit Getränkesubstrat gefüllt ist, wird in einem Verfahrensschritt Z3 eine Aufforderung an den Benutzer ausgegeben den Auffangbehälter zu entleeren. Bis eine Entleerung des Auffangbehälters im Verfahrensschritt S3 stattfindet, können Teile der Funktionen der Getränkezubereitungsvorrichtung, beispielsweise Getränkezubereitungen, gesperrt oder deaktiviert bleiben.

Wenn ein Zustand Z2 festgestellt wird, dass der Auffangbehälter nur teilweise gefüllt ist oder im Zustand Z4 festgestellt wird, dass eine Entleerung des Auffangbehälters stattgefunden hat, kann die Getränkezubereitungsvorrichtung wieder in den grundsätzlichen, betriebsbereiten Zustand Z1 zurückkehren. Für den Fall, dass der Hauptschalter zum Ausschalten der Getränkezubereitungsvorrichtung betätigt wird oder aufgrund einer Zeitschaltfunktionalität oder eines Timers eine automatische Ausschaltung erfolgt, kann im Verfahrensschritt S4 eine Überführung von dem betriebsbereiten Zustand zu dem Standby-ZustandZ6 eingeleitet werden. Wenn über die Protokollierung der Getränkezubereitung und die Erfassungsmittel im Vorfeld festgestellt wurde, dass ein entleerter Auffangbehälter zum Zeitpunkt des Übergangs in den Standby-ZustandZ6 vorliegt, kann ein Aktor deaktiviert bleiben und ein Zustand Z6 herbeigeführt werden. Wird jedoch zum Zeitpunkt des Übergangs in den Standby-Zustand Z6 ein teilweise oder vollständig gefüllter Auffangbehälter erfasst oder plausibilisiert, kann die Steuereinrichtung den Aktor aktivieren. Dann kann ein beispielsweise ein Zustand Z5 erreicht werden, der als Hygienemodus oder Hygiene-Standby-Zustand betitelt werden kann und der sich im Wesentlichen durch einen, bevorzugt dauerhaft aktivierten Aktor vom normalen Standby-Zustand Z6 unterscheidet. Der Aktor kann dann solange aktiv bleiben, bis entweder eine vorgegebene, berechnete oder ermittelte, bevorzugt ununterbrochene, Betriebsdauer abgelaufen ist oder bis im Verfahrensschritt S5 eine Entleerung, beispielsweise über einen Zugriff auf den Auffangbehälter und/oder eine Entnahme des Auffangbehälters erfasst oder plausibilisiert wird. Auch dann kann der Aktor wieder deaktiviert werden. Dies kann vorteilhaft auch im Standby-Zustand erfolgen und überführt dann - insbesondere gesteuert von der Steuereinrichtung - zum normalen Standby-Zustand Z6.

Im Beispiels der Fig. 2 ist das Betriebsverfahren so dargestellt, dass die Aktivierung des Aktors lediglich im Zusammenhang mit dem Übergang zwischen dem betriebsbereiten Zustand Z1 und dem Standby-Zustand Z6 erfolgt. Es kann jedoch das Verfahren auch so realisiert werden, dass unmittelbar im Anschluss an eine Getränkezubereitung, solange die Getränkezubereitungsvorrichtung noch im betriebsbereiten Zustand Z1 ist, aber noch kein Zugriff auf den Auffangbehälter oder eine Entnahme des Auffangbehälters erfasst oder plausibilisiert wurde, der Aktor bereits aktiviert wird und dann aktiviert bleibt, unabhängig davon, ob der Standby-Zustand Z6 aktiviert wird, oder der betriebsbereite Zustand Z1 beibehalten wird.

### Bezugszeichen

- 01: Getränkezubereitungsvorrichtung
- 02: Gehäuse
- 03: Innenraum
- 04: Auffangbehälter
- 05: Getränkesubstrat
- 06: Öffnung
- 07: Seitenflächen
- 08: Rand
- 09: Aktor
- 10: Wandelementen
- 11: Ausgabeeinheit
- 12: Steuereinrichtung
- 13: Erfassungsmitteln

## Patentansprüche

1. Getränkezubereitungsvorrichtung (01) mit einem Auffangbehälter (04) für, insbesondere loses oder portioniertes, feuchtes Getränkesubstrat (05), wobei der Auffangbehälter eine Öffnung (06) aufweist oder Öffnungsflächen umfasst, über die der Auffangbehälter (04) mit einem Innenraum (03) der Getränkezubereitungsvorrichtung (01) in Verbindung steht,
**dadurch gekennzeichnet,**
**dass** der Öffnung (06) oder den Öffnungsflächen ein, bevorzugt elektromechanischer, Aktor (09) zugeordnet vorgesehen ist, der dazu eingerichtet ist eine Luftströmung an der Öffnung (06) oder den Öffnungsflächen zu erzeugen.

2. Getränkezubereitungsvorrichtung (01) nach Anspruch 1,
**dadurch gekennzeichnet,**
**dass** der Aktor (09) dauerbetriebsfähig ausgebildet ist, solange eine Netzverbindung der Getränkezubereitungsvorrichtung (01) zu einem elektrischen Versorgungsnetz besteht.

3. Getränkezubereitungsvorrichtung (01) nach Anspruch 1 oder 2,
**dadurch gekennzeichnet,**
**dass** der Aktor (09) im Betrieb, bevorzugt in einem Dauerbetrieb, eine elektrische Leistungsaufnahme von bis zu 0,4 Watt, bevorzugt bis zu 0,3 Watt, aufweist.

4. Getränkezubereitungsvorrichtung (01) nach einem der vorangehenden Ansprüche,
**gekennzeichnet durch**
eine Steuereinrichtung (12), insbesondere eine zentrale Recheneinheit, die zur Protokollierung von Getränkezubereitungen eingerichtet ist und die datentechnisch mit Erfassungsmitteln (13), bevorzugt elektrischen Kontakten, Schaltern und/oder Sensoren, verknüpft ist, mittels derer ein Zugriff auf den und/oder eine Entnahme des Auffangbehälters (04) erfassbar oder plausibilisierbar ist, wobei die Steuereinrichtung (12) fernen zur Steuerung des Aktors (09) eingerichtet ist und eine Aktivierung, insbesondere einschließlich einer, bevorzugt ununterbrochenen, Betriebsdauer, des Aktors (09) abhängig von protokollierten Getränkezubereitungen und Zugriff auf den und/oder Entnahme des Auffangbehälters (04) steuerbar ist.

5. Getränkezubereitungsvorrichtung (01) nach Anspruch 4,
**gekennzeichnet durch**
eine, bevorzugt akustische und/oder optische, Ausgabeeinheit (11), die von der Steuereinrichtung (12) so ansteuerbar ist, dass eine akustisches oder optisches Signal ausgebbar ist, wenn und/oder solange der Aktor (09) aktiviert wird/ist.

6. Getränkezubereitungsvorrichtung nach einem der vorangehenden Ansprüche,
**dadurch gekennzeichnet,**
**dass** der Aktor (09) angrenzend an den Auffangbehälter (04), bevorzugt an oder über einem Rand (08) des Auffangbehälters (04), der die Öffnung (06) oder eine Öffnungsfläche begrenzt, angeordnet ist.

7. Verfahren zum Betrieb einer Getränkezubereitungsvorrichtung (01) mit einem Auffangbehälter (04) für, insbesondere loses oder portioniertes, feuchtes Getränkesubstrat (05), wobei der Auffangbehälter (04) eine Öffnung (06) aufweist oder Öffnungsflächen umfasst,
**gekennzeichnet durch**
die folgenden Verfahrensschritte:
- Erkennen und/oder Überwachen von einer Anwesenheit und/oder einem Füllungszustand von feuchtem Getränkesubstrat (05) in dem Auffangbehälter (04);
- Aktivieren eines, bevorzugt elektromechanischen, Aktors (09) der der Öffnung (06) oder den Öffnungsflächen des Auffangbehälters (04) zugeordnet ist, wodurch eine Luftströmung an der Öffnung (06) oder den Öffnungsflächen erzeugt wird, in Abhängigkeit einer Erkennung von feuchtem Getränkesubstrat (05) in dem Auffangbehälter.

8. Verfahren nach Anspruch 7,
**dadurch gekennzeichnet,**
**dass** der Aktor (09) dauerhaft oder für eine vorgegebene Dauer aktiviert bleibt, solange eine Netzverbindung der Getränkezubereitungsvorrichtung zu einem elektrischen Versorgungsnetz besteht und die Erkennung von feuchtem Getränkesubstrat (05) in dem Auffangbehälter besteht.

9. Verfahren nach Anspruch 7 oder 8,
**dadurch gekennzeichnet,**
**dass** der Aktor (09) im Betrieb, bevorzugt in einem Dauerbetrieb, mit einer elektrischen Leistungsaufnahme von bis zu 0,4 Watt, bevorzugt bis zu 0,3 Watt, betrieben wird.

10. Verfahren nach einem der Ansprüche 7 bis 9,
**dadurch gekennzeichnet,**
**dass** im Rahmen der Erkennung und/oder Überwachung eine Steuereinrichtung (12), insbesondere eine zentrale Recheneinheit, Getränkezubereitungen der Getränkezubereitungsvorrichtung (01) protokoliert, wobei mittels Erfassungsmitteln (13), bevorzugt elektrischen Kontakten, Schaltern und/oder Sensoren, die datentechnisch mit der Steuereinrichtung verknüpft sind, ein Zugriff auf den und/oder eine Entnahme des Auffangbehälters (04) erfasst oder plausibilisiert wird, wobei die Steuereinrichtung (12) ferner den Aktor (09) steuert und den Aktor (09) aktiviert, insbesondere eine, bevorzugt ununterbrochene, Betriebsdauer, des Aktors (09), abhängig von protokollierten Getränkezubereitungen und Zugriff auf und/oder Entnahme des Auffangbehälters (04) steuert.

11. Verfahren nach Anspruch 10,
**gekennzeichnet durch**
dass eine, bevorzugt akustische und/oder optische, Ausgabe über eine Ausgabeeinheit (11), die von der Steuereinrichtung (12) angesteuert wird, in Form eines akustischen und/oder optischen Signals ausgegeben wird, wenn und/oder solange der Aktor (09) aktiviert wird/ist.

12. Verfahren nach einem der Ansprüche 7 bis 11,
**dadurch gekennzeichnet,**
**dass** der Aktor (09) aktiviert bleibt, bis ein Wasseranteil weniger als 65 Gew.%, bevorzugt weniger als 60 Gew.%, einer Trockenmasse des Getränkesubstrats (05) beträgt.

13. Verfahren nach einem der Ansprüche 7 bis 12,
**dadurch gekennzeichnet,**
**dass** der Aktor (09) aktiviert bleibt, wenn die Getränkezubereitungsvorrichtung (01), insbesondere selbsttätig, in einen Standby-Zustand (Z6) überführt wird.
